# EUROPEAN PATENT APPLICATION

(11) **EP 3 543 644 A1**
(43) Date of publication of application: **25.09.2019**
(21) Application number: 18739256.8
(22) Date of filing: 12.01.2018
(51) Int. Cl.: G01B 11/00, G01B 11/26

(54) **MARKER MOUNTING UNIT**

(30) Priority: 13.01.2017 JP 2017004654; 03.03.2017 JP 2017040564
(71) Applicant: Enplas Corporation, Kawaguchi-shi, Saitama 332-0034 (JP)
(72) Inventor: FUKUDA Yasuyuki, Kawaguchi-shi Saitama 332-0034 (JP); SAITO Tomohiro, Kawaguchi-shi Saitama 332-0034 (JP)
(74) Representative: J A Kemp
(86) International application number: PCT/JP2018/000641
(87) International publication number: WO 2018/131680

(57) **Abstract**

The present invention provides a marker mounting unit for mounting, for example, a marker such as a RAS marker, which can accurately detect the detection reference portion. A marker mounting unit (1) according to the present invention includes an upper substrate (10) and a lower substrate (11). The marker mounting unit (1) is a laminate in which the upper substrate (10) is stacked on the lower substrate (11). The upper substrate (10) has a through hole (102). The lower substrate (11) has a bump (112) serving as a detection reference portion at a position corresponding to the through hole (102) of the upper substrate (10). The bump (112) of the lower substrate (11) is inserted into the through hole (102) of the upper substrate (10). In the laminate, an upper surface (112a) of the bump (112) of the lower substrate (11) is positioned at the same height as or higher than an upper surface of the upper substrate (10).

## Description

### TECHNICAL FIELD

The present invention relates to a marker mounting unit.

### BACKGROUND ART

In the fields of augmented reality (also referred to as "AR" hereinafter), robotics, etc., a so-called visual marker is used to recognize the position, the orientation, and the like of an object. As the marker, for example, an AR marker is commonly used. As another example of the marker, for example, a marker that includes a lenticular lens arranged on a black stripe pattern has been reported (Patent Literature 1). The marker is commonly referred to as a rotation angle scale marker (RAS marker). When an image appearing on the marker is detected by a detection device such as a camera, the color gradation pattern of the image changes depending on the viewing angle of the camera with respect to the marker. Thus, the rotation angle of the marker can be determined by detecting the color gradation pattern of the marker.

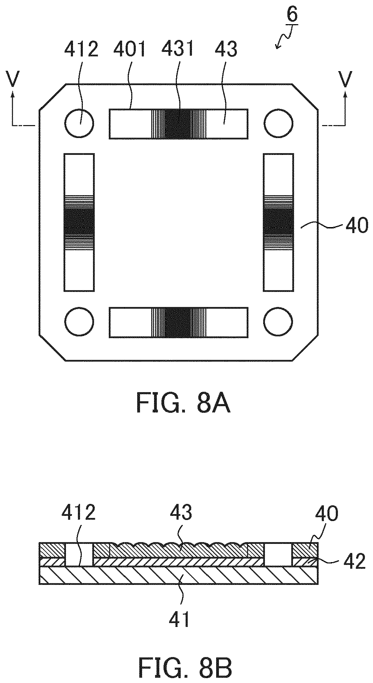

The visual marker is usually arranged on a substrate, and a plurality of detection reference portions serving as marks of regions to be detected by the camera are provided on the substrate, and such a substrate is used as a marker unit. An example of the marker unit is shown in FIGs. 8A and 8B. FIGs. 8A and 8B show schematic views of a marker unit on which a RAS marker is mounted. FIG. 8A is a top view and FIG. 8B is a cross-sectional view taken along the line V-V of FIG. 8A.

A marker unit 6 includes a lower substrate 41 having a black upper surface, an interposed substrate 42 having a white upper surface, a transparent upper substrate 40, and a RAS marker 43. The interposed substrate 42 is disposed on the lower substrate 41, and the upper substrate 40 and the RAS marker 43 are disposed on the interposed substrate 42. The interposed substrate 42 and the upper substrate 40 have circular through holes at positions corresponding to each other, and a circular detection reference portion 412 is formed by exposing the black surface of the lower substrate 41. The upper substrate 40 has a polygonal through hole 401 between adjacent detection reference portions 412, and the RAS marker 43 is disposed on the interposed substrate 42 and in an inner region of the polygonal through hole 401 of the upper substrate 40.

### Citation List

### Patent Literature

Patent Literature 1: JP 2012-145559 A

### SUMMARY OF INVENTION

### Technical Problem

As a precondition for detecting an image 431 of the RAS marker 43 in the marker unit 6, it is important to accurately detect the detection reference portion 412. However, there is a problem that the detection accuracy is not sufficient.

With the foregoing in mind, it is an object of the present invention to provide a marker mounting unit for mounting, for example, a marker such as a RAS marker, which can accurately detect the detection reference portion.

### Solution to Problem

In order to achieve the above object, the present invention provides a marker mounting unit including: an upper substrate; and a lower substrate, wherein the marker mounting unit is a laminate in which the upper substrate is stacked on the lower substrate, the upper substrate has a through hole, the lower substrate has a bump serving as a detection reference portion at a position corresponding to the through hole of the upper substrate, the bump of the lower substrate is inserted into the through hole of the upper substrate, and in the laminate, an upper surface of the bump of the lower substrate is positioned at the same height as or higher than an upper surface of the upper substrate.

The present invention also provides a marker unit including a marker mounting unit; and a marker, wherein the marker mounting unit is the marker mounting unit according to the present invention, and the marker is mounted on the marker mounting unit.

In the marker mounting unit of the present invention, as described above, the lower substrate has a bump, and the bump is inserted into the through hole of the upper substrate, whereby the detection reference portion, which is the upper surface of the bump, is positioned higher than the upper surface of the other region of the lower substrate and at the same height as or higher than the upper surface of the upper substrate. Thus, the marker mounting unit of the present invention can accurately detect the detection reference portion.

### BRIEF DESCRIPTION OF DRAWINGS

FIG. 1A is a top view showing an example of the marker mounting unit according to the first embodiment. FIG. 1B is a cross-sectional view of the marker mounting unit taken along the line I-I of FIG. 1A.
FIG. 2 is a top view showing a variation of the marker mounting unit according to the first embodiment.
FIG. 3 is a cross-sectional view showing an example of the marker mounting unit according to the second embodiment.
FIG. 4 is a cross-sectional view showing an example of the marker mounting unit according to the third embodiment.
FIG. 5A is a top view showing an example of the marker unit according to the fourth embodiment. FIG. 5B is a cross-sectional view of the marker unit taken along the line II-II of FIG. 5A. FIG. 5C is a top view showing a variation of the marker unit according to the fourth embodiment. FIG. 5D is a cross-sectional view of the marker unit taken along the line III-III of FIG. 5C.
FIG. 6A is a plan view showing an example of the marker mounting unit according to the fifth embodiment. FIG. 6B is a cross-sectional view of the marker unit taken along the line IV-IV of FIG. 6A.
FIGs. 7A and 7B are cross-sectional views showing an example of the marker mounting unit according to the sixth embodiment.
FIG. 8A is a top view showing an example of a conventional marker unit. FIG. 8B is a cross-sectional view of the marker unit taken along the line V-V of FIG. 8A.

### DESCRIPTION OF EMBODIMENTS

The inventors of the present invention have intensively studied the fact that the detection accuracy of the detection reference portion 412 in the conventional marker unit 6 shown in FIGs. 8A and 8B is not sufficient. As a result, it has been found that, when the surface of the upper substrate 40 is assumed to be a reference, since the surface of the lower substrate 41 having the detection reference portion 412 is positioned significantly lower than the reference, the edge of the through hole of the upper substrate covers the detection reference portion as the viewing angle increases, and this affects the detection accuracy. Thus, the inventors have come to find an aspect of the present invention in which a bump is provided on the lower substrate, the upper surface of the bump is used as the detection reference, the bump of the lower substrate is inserted into the through hole of the upper substrate, and the upper surface of the bump of the lower substrate is disposed at almost the same height as or higher than the upper surface of the upper substrate. According to the marker mounting unit of the present invention, for example, even when the viewing angle increases, the detection reference portion can be prevented from being covered with the edge of the through hole of the upper substrate, and as a result, the detection accuracy of the detection reference portion can be improved.

In the marker mounting unit of the present invention, for example, the upper substrate is stacked directly on the lower substrate, and there is no gap or no detectable gap between the outer periphery of the bump of the lower substrate and the inner periphery of the through hole of the upper substrate.

In the marker mounting unit of the present invention, for example, the upper substrate is a transparent substrate.

In the marker mounting unit of the present invention, for example, the upper surface of the bump of the lower substrate is formed of a colored member.

The marker mounting unit of the present invention further includes: an interposed substrate, wherein in the laminate, the interposed substrate is disposed between the lower substrate and the upper substrate, the interposed substrate has a through hole at a position corresponding to the through hole of the upper substrate, and the bump of the lower substrate is inserted into the through hole of the interposed substrate and the through hole of the upper substrate, for example.

In the marker mounting unit of the present invention, for example, on the upper surface side of the laminate, the length of the gap (A) between the outer periphery of the bump of the lower substrate and the inner periphery of the through hole of the interposed substrate and the length of the bump (C) in the same planar direction satisfy A ≤ 0.05 × C.

In the marker mounting unit of the present invention, for example, the interposed substrate has a cylindrical portion protruding upward around the through hole, and the bump of the lower substrate is inserted into the through hole in the cylindrical portion of the interposed substrate.

In the marker mounting unit of the present invention, for example, on the upper surface side of the laminate, the length of the gap (A) between the outer periphery of the bump of the lower substrate and the inner periphery of the through hole of the interposed substrate and the length of the gap (B) between the outer periphery of the cylindrical portion of the interposed substrate and the inner periphery of the through hole of the upper substrate satisfy A < B.

In the marker mounting unit of the present invention, for example, the upper substrate is stacked on the lower substrate with the interposed substrate interposed therebetween, there is no distance between the outer periphery of the bump of the lower substrate and the inner periphery of the through hole of the interposed substrate, or there is no gap or no detectable gap between the outer periphery of the bump of the lower substrate and the inner periphery of the cylindrical portion of the interposed substrate.

In the marker mounting unit of the present invention, for example, the interposed substrate is a reflector.

In the marker mounting unit of the present invention, for example, the upper surface of the bump of the lower substrate is different from the upper surface of the interposed substrate in at least one of hue, lightness, and saturation.

In the marker mounting unit of the present invention, for example, the upper substrate is a transparent substrate, the interposed substrate is a substrate having a white upper surface, and the lower substrate is a substrate that has the bump having a black upper surface.

The marker mounting unit of the present invention further includes, for example, a marker.

Embodiments of the present invention are described below with reference to the drawings. The present invention is in no way limited or restricted by the following embodiments. In the drawings, identical parts are indicated with identical reference signs. Furthermore, for convenience in explanation, the structure of each component may be appropriately simplified, and the size, the ratio, and the like of components are not limited to the conditions of the drawings.

### First Embodiment

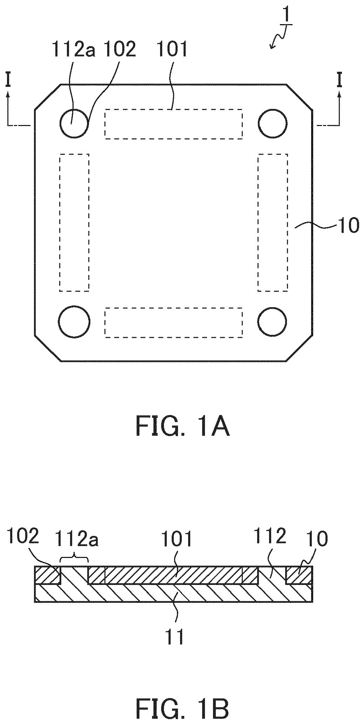

The first embodiment relates to an example of the marker mounting unit of the present invention. FIGs. 1A and 1B show an example of a marker mounting unit of the present embodiment. FIG. 1A is a plan view of a marker mounting unit 1, and FIG. 1B is a cross-sectional view of the marker mounting unit 1 taken along the line I-I of FIG. 1A.

As shown in FIGs. 1A and 1B, the marker mounting unit 1 includes an upper substrate 10 and a lower substrate 11. The marker mounting unit 1 is a laminate in which the upper substrate 10 is stacked on the lower substrate 11. The upper substrate 10 has circular through holes 102 at four corners. The upper substrate 10 has, for example, marker arrangement regions 101 each placed between two circular through holes 102. The marker arrangement region 101 surrounded by the dotted line is a region to be served as a marker such as a RAS marker, for example, and the upper surface of the marker arrangement region 101 on the upper substrate 10 also serves as the upper surface of the marker, for example. The lower substrate 11 has bumps 112 at positions corresponding to the through holes 102 of the upper substrate 10, and the upper surface 112a of the bump 112 serves as a detection reference portion. In the laminate, the bump 112 of the lower substrate 11 is inserted into the circular through hole 102 of the upper substrate 10, and the upper surface 112a of the bump 112 of the lower substrate 11 is positioned at the same height as or higher than the upper surface of the upper substrate 10. As described above, for example, when a marker is mounted on the marker mounting unit 1, the upper surface of the marker arrangement region 101 of the upper substrate 10 becomes the upper surface of the marker, and therefore, in the marker unit in which the marker is mounted on the marker mounting unit 1, the upper surface 112a of the bump 112 is positioned at the same height as or higher than the upper surface of the marker.

The method of mounting the marker on the marker mounting unit 1 is not particularly limited, and for example, when the marker is a RAS marker or the like, the marker arrangement region 101 of the upper substrate 10 can be served as a marker such as a RAS marker by forming a detectable portion such as a black stripe pattern on the lower surface of the upper substrate 10 in a region corresponding to the marker arrangement region 101. In the present invention, the term "marker arrangement" includes an aspect in which a physically independent marker is placed on the marker mounting unit and an aspect in which the function of a marker such as a RAS marker is given to a predetermined region of a component of the marker mounting unit to be served as a marker.

In the present invention, "the bump is inserted into the through hole" denotes a positional relationship between the through hole and the bump. In the present invention, the bump is only required to be disposed inside the through hole, and for example, there may be a gap or there may be no gap between the bump and the through hole. More specifically, for example, the present invention is not limited to an aspect in which the upper substrate having the through hole and the lower substrate having the bump are provided separately, and the bump of the lower substrate is inserted into the through hole of the upper substrate, and the present invention may include a state in which the upper substrate is formed by molding the material of the upper substrate around the bump of the lower substrate. The same applies hereinafter.

Although the marker mounting unit 1 in the first embodiment has a two-layer structure of the upper substrate 10 and the lower substrate 11, the present invention is not limited thereto, and for example, an interposed substrate may be provided between the upper substrate 10 and the lower substrate 11. The aspect of including the interposed substrate is described below.

In the marker mounting unit 1, the upper surface 112a of the bump 112 of the lower substrate 11 is positioned at the same height as or higher than the upper surface of the upper substrate 10. "The same height" which can be also referred to as "a state in which both are in a flat state" means, for example, that there is substantially no difference in level between them. The relationship between the upper surface 112a of the bump 112 of the lower substrate 11 and the upper surface of the upper substrate 10 is not particularly limited as long as the upper surface 112a of the bump 112 of the lower substrate 11 is positioned at the same height as or higher than the upper surface of the upper substrate 10. As a specific example, when the height to the upper surface of the upper substrate 10 with reference to the lower surface of the upper substrate 10 is assumed to be 1, the relative value of the height from the reference to the upper surface 112a of the bump 112 of the lower substrate 11 is, for example, in the range from 1 to 1.2, 1 to 1.35, or 1 to 1.5.

In the marker mounting unit 1, it is preferable that the upper surface 112a of the bump 112 of the lower substrate 11 be disposed at almost the same height as the upper surface of the upper substrate 10, for example. The "almost the same height" includes, for example, a state in which the upper surface 112a of the bump 112 of the lower substrate 11 is positioned at the same height as the upper surface of the upper substrate 10 and a state in which the lower substrate and the upper substrate are disposed such that the relative value of the height is in the range from 1 to 1.2. In the case where the marker mounting unit 1 of the present embodiment satisfies this condition, for example, when a marker is mounted, the upper surface of the upper substrate becomes the upper surface of the mounted marker, and when a marker mounting unit on which the marker is mounted is detected by a detection device such as a camera, the distance between the detection device and the mounted marker and the distance between the detection device and the detection reference portion are substantially the same. Thereby, the detection conditions of the marker and the detection reference portion by the detection device become substantially constant, and, as a result, the detection accuracy of the detection reference portion can be improved.

In the marker mounting unit 1, for example, there may be or may not be a gap between the outer periphery of the bump 112 of the lower substrate 11 and the inner periphery of the through hole 102 of the upper substrate 10. The state of the gap is not particularly limited, and examples thereof include: a state in which the outer periphery of the bump 112 of the lower substrate 11 and the inner periphery of the through hole 102 of the upper substrate 10 face each other in parallel and are separated by a substantially constant distance; and a state in which the bump 112 of the lower substrate 11 has a columnar shape and the through hole 102 of the upper substrate 10 has a tapered shape or a stepped shape in which the diameter of the through hole 102 increases from the lower surface to the upper surface of the upper substrate 10.

In the marker mounting unit 1, it is preferable that, for example, there be no gap or no detectable gap between the outer periphery of the bump 112 of the lower substrate 11 and the inner periphery of the through hole 102 of the upper substrate 10. "There is no detectable gap" means, for example, that even if there is a gap, it cannot be detected by a detection device such as a camera. As a specific example, under the conditions that the detection device is a CCD camera, the distance (observation distance) between the marker mounting unit 1 and the detection device is 1 m, the angle of view is 25°, and the size of the marker mounting unit 1 is 40 mm, the resolution is 0.22 mm/pixel. Thus, since the gap is displayed blurred in the pixels of the detection device if the resolution is 0.22 mm or less, the gap is preferably 0.22 mm or less, more preferably 0.18 mm or less, and still more preferably 0.12 mm or less.

It is preferable that the bump 112 of the lower substrate 11 and the through hole 102 of the upper substrate 10 have substantially the same shape and that the area of the plane of the former (for example, the cross section in the planar direction, specifically, the upper surface 112a) and the hole area of the through hole 102 of the latter be substantially the same, for example. "The areas are substantially the same" means, for example, that the area of the plane of the bump 112 is in the range from 0.8 to 1 times as large as the hole area of the through hole 102.

The shape of the plane (for example, the cross section in the planar direction, specifically, the upper surface 112a) of the bump 112 of the lower substrate 11 is not particularly limited, and may be, for example, a circular shape, a polygonal shape, or the like. Examples of the circular shape include a perfect circle and an ellipse, and a perfect circle is preferable. The polygonal shape may be, for example, a polygon such as a triangle or a quadrilateral, and the examples of the quadrilateral include a square and a rectangle. The shape of the bump 112 is, for example, a columnar shape the same as the upper surface 112a, and is, for example, a cylindrical columnar shape, a polygonal columnar shape, or the like.

In the lower substrate 11, the number and position of the detection reference portions 112a (bumps 112) are not particularly limited, and may be any number and any position as long as, when a marker (not shown) is mounted on the marker mounting unit 1, the number and position of the detection reference portions 112a are appropriate for being marks of the region to be detected by the camera, for example. In the marker mounting unit 1 shown in FIGs. 1A and 1B, the number of the detection reference portions 112a is four, and the detection reference portion 112a is positioned, for example, in the vicinity of each end in the longitudinal direction of the marker arrangement region 101.

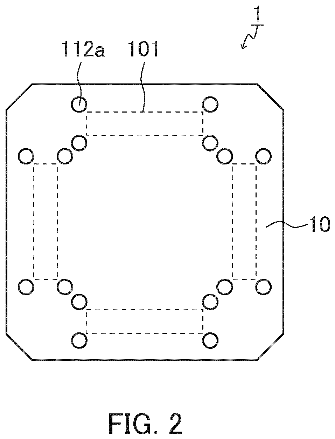

In the present invention, the number and position of the detection reference portions 112a are not limited to this example. Another example of the detection reference portion 112a in the marker mounting unit of the present invention is shown in the top view of FIG. 2. As shown in FIG. 2, the marker mounting unit 1 may have, for example, four detection reference portions 112a for one marker arrangement area 101.

The upper substrate 10 has through holes 102 at positions corresponding to the bumps 112 of the lower substrate 11. The shape of the through hole 102 is not particularly limited, and may be, for example, the same shape as the bump 112, and specific examples thereof include a circular shape and a polygonal shape.

In the upper substrate 10, the number and position of the through holes 102 into which the bumps 112 are inserted are not particularly limited, and since the through holes 102 correspond to the bumps 112 of the lower substrate 11, reference can be made to the description as to the bumps 112 described above.

In the upper substrate 10, the shape, number, and position of the marker arrangement region 101 on which the marker is to be mounted are not particularly limited, and can be appropriately determined depending on the shape, number, and position of the marker to be mounted on the marker mounting unit 1.

The combination of the colors of the lower substrate 11 and the upper substrate 10 is not particularly limited, and may be any combination as long as, when a marker is mounted on the marker mounting unit 1 to be detected, the upper surface 112a of the bump 112 serving as the detection reference portion and the mounted marker can be detected.

The combination of the colors of the substrates may be, for example, as follows. In the lower substrate 11, for example, the upper surface 112a of the bump 112 may be black, or the entire upper surface including the bump 112 of the lower substrate 11 or the entire lower substrate 11 may be black. The color of the upper substrate 10 is not particularly limited, and is, for example, a transparent substrate. The lower substrate 11 and the upper substrate 10 are, for example, resin substrates.

The method of manufacturing the marker mounting unit of the present embodiment is not particularly limited, and the marker mounting unit can be manufactured by, for example, a molding method using a resin. The laminate of the upper substrates 10 and the lower substrate 11 may be formed, for example, by stacking substrates separately molded or by two-color molding. In the latter case, for example, the laminate is formed by molding one of the substrates and then molding the other of the substrates on the molded substrate. According to the latter method, for example, the upper substrate 10 can be formed around the bump 112 of the lower substrate 11 with substantially no gap. Furthermore, according to this method, for example, since there is no need to insert the bump 112 of the lower substrate 11 into the through hole 102 of the upper substrate 10, the corner of the leading end of the bump 112 can be prevented from being chipped due to contact at the time of insertion, and the shape of the bump 112 can be maintained.

Examples of the molding resin for these substrates include polycarbonate (PC), acrylic resin (e.g., polymethyl methacrylate (PMMA)), cycloolefin polymer (COP), and cycloolefin copolymer (COC). In the case of coloring the substrate, a desired colored resin obtained by adding a coloring agent (e.g., masterbatch, dry color, or the like) of an intended color to the resin can be used as a molding material.

### Second Embodiment

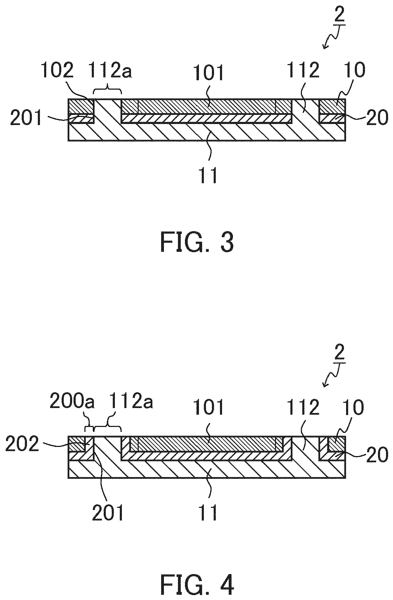

The second embodiment relates to an example of the marker mounting unit further including an interposed substrate. FIG. 3 shows an example of the marker mounting unit of the present embodiment. FIG. 3 is a cross-sectional view of the marker mounting unit 2. In the present embodiment, reference can be made to the description of the first embodiment, unless otherwise stated.

As shown in FIG. 3, the marker mounting unit 2 includes an upper substrate 10, the lower substrate 11, and the interposed substrate 20. The marker mounting unit 2 is a laminate in which the upper substrate 10 is stacked on the lower substrate 11 with the interposed substrate 20 interposed therebetween. Like the upper substrate 10, the interposed substrate 20 has circular through holes 201 at four corners. In the laminate, the bump 112 of the lower substrate 11 is inserted into the circular through hole 201 of the interposed substrate 20 and the circular through hole 102 of the upper substrate 10, and the upper surface 112a of the bump 112 of the lower substrate 11 is positioned at the same height as or higher than the upper surface of the upper substrate 10.

In the marker mounting unit 2, the relationship between the upper surface 112a of the bump 112 of the lower substrate 11 and the upper surface of the upper substrate 10 is not particularly limited as long as the upper surface 112a of the bump 112 of the lower substrate 11 is positioned at the same height as or higher than the upper surface of the upper substrate 10. As a specific example, when the height to the upper surface of the upper substrate 10 with reference to the lower surface of the interposed substrate 20 is assumed to be 1, the relative value of the height from the reference to the upper surface 112a of the bump 112 of the lower substrate 11 is, for example, in the range from 1 to 1.2, 1 to 1.35, or 1 to 1.5.

In the marker mounting unit 2, it is preferable that the upper surface 112a of the bump 112 of the lower substrate 11 be disposed at almost the same height as the upper surface of the upper substrate 10, for example. The "almost the same height" includes, for example, a state in which the upper surface 112a of the bump 112 of the lower substrate 11 is positioned at the same height as the upper surface of the upper substrate 10 and a state in which the lower substrate and the upper substrate are disposed such that the relative value of the height is in the range from 1 to 1.2. In the case where the marker mounting unit 2 of the present embodiment satisfies this condition, for example, when a marker is mounted, the upper surface of the upper substrate becomes the upper surface of the mounted marker, and when a marker mounting unit on which the marker is mounted is detected by a detection device such as a camera, the distance between the detection device and the mounted marker and the distance between the detection device and the detection reference portion are substantially the same. Thereby, the detection conditions of the marker and the detection reference portion by the detection device become substantially constant, and, as a result, the detection accuracy of the detection reference portion can be improved.

In the marker mounting unit 2, it is preferable that, for example, there be no gap or no detectable gap between the outer periphery of the bump 112 of the lower substrate 11 and the inner periphery of the through hole 201 of the interposed substrate 20. "There is no detectable gap" means, for example, that even if there is a gap, it cannot be detected by a detection device such as a camera. As a specific example, when the detection device is a CCD camera, the distance (observation distance) between the marker mounting unit 2 and the detection device is 1 m, the angle of view is 25°, and the size of the marker mounting unit 2 is 40 mm, the resolution is 0.22 mm/pixel. Thus, since the gap is displayed blurred in the pixels if the resolution is 0.22 mm or less, the gap is preferably 0.22 mm or less, more preferably 0.18 mm or less, and still more preferably 0.12 mm or less.

It is preferable that the bump 112 of the lower substrate 11 and the through hole 201 of the interposed substrate 20 have substantially the same shape, for example, and that the area of the plane of the former (for example, the cross section in the planar direction, specifically, the upper surface 112a) and the hole area of the through hole 201 of the latter be substantially the same. "The areas are substantially the same" means, for example, that the area of the plane of the bump 112 is in the range from 0.8 to 1 times as large as the hole area of the through hole 201.

The interposed substrate 20 has the through holes 201 at positions corresponding to the bumps 112 of the lower substrate 11. The shape of the through hole 201 is not particularly limited, and may be, for example, the same shape as the bump 112, and specific examples thereof include a circular shape and a polygonal shape.

In the upper substrate 20, the number and position of the through holes 201 are not particularly limited, and since the through holes 201 correspond to the bumps 112 of the lower substrate 11, reference can be made to the description as to the bump 112 in the first embodiment.

The combination of the colors of the lower substrate 11, the interposed substrate 20, and the upper substrate 10 is not particularly limited, and may be any combination as long as, when a marker is mounted on the marker mounting unit 2 to be detected, the upper surface 112a of the bump 112 serving as the detection reference portion and the mounted marker can be detected.

The color of the interposed substrate 20 can be determined depending on, for example, the upper substrate 10, the lower substrate 11, and the marker to be mounted. The color of the upper surface of the interposed substrate 20 is, for example, different from the color of the upper surface 112a of the bump 112 serving as the detection reference portion of the lower substrate 11. Furthermore, it is preferable that the combination of the color of the upper surface of the interposed substrate 20 and the color of the upper surface 112a of the bump 112 of the lower substrate 11 be, for example, a combination that easily provides the contrast.

The combination of the colors of the substrates may be, for example, as follows. In the lower substrate 11, for example, the upper surface 112a of the bump 112 may be black, or the entire upper surface including the bump 112 of the lower substrate 11 or the entire lower substrate 11 may be black. The interposed substrate 20 may be, for example, a reflector for the marker to be mounted. For example, the upper surface of the interposed substrate 20 may be white, and the entire interposed substrate 20 may be white. The upper substrate 10 is, for example, a transparent substrate. The lower substrate 11, the interposed substrate 20, and the upper substrate 10 are, for example, resin substrates.

According to the present embodiment, the interposed substrate 20 (for example, white) is disposed around the bump 112 (for example, black) serving as the detection reference portion of the lower substrate 11, for example, and the combination of these colors easily provides the contrast. Thus, the detection accuracy of the detection reference portion 112a can be further improved.

The method of manufacturing the marker mounting unit of the present embodiment is not particularly limited, and is, for example, the same as that of the first embodiment, and is preferably two-color molding. The stacking of the lower substrate 11 and the interposed substrate 20 can be performed by two-color molding, for example, by molding the lower substrate 11 having the bump 112 using a colored resin (for example, black) and then molding the interposed substrate 20 on the lower substrate 11 using a colored resin of a different color (for example, white). As a result, the interposed substrate 20 can be formed around the bump 112 with substantially no gap. Furthermore, according to this method, for example, since there is no need to insert the bump 112 of the lower substrate 11 into the through hole 201 of the interposed substrate 20, the corner of the leading end of the bump 112 can be prevented from being chipped due to contact at the time of insertion, and the shape of the bump 112 can be maintained. The stacking of the upper substrate 10 is not particularly limited, and, for example, a separately molded upper substrate 10 may be stacked on the interposed substrate 20, or the upper substrate 10 may be molded on the two-color molded laminate of the lower substrate 11 and the interposed substrate 20 using a resin (for example, a transparent resin).

### Third Embodiment

The third embodiment relates to an example of the marker mounting unit in which the interposed substrate has a cylindrical portion serving as a guide. FIG. 4 shows an example of the marker mounting unit of the present embodiment. FIG. 4 is a cross-sectional view of the marker mounting unit 2. In the present embodiment, reference can be made to the description of the first and second embodiments, unless otherwise stated.

As shown in FIG. 4, in the marker mounting unit 2, the interposed substrate 20 has a cylindrical portion 202 protruding upward around the through hole 201. The bump 112 of the lower substrate 11 is inserted into the through hole 201 in the cylindrical portion 202 of the interposed substrate 20.

In the marker mounting unit 2, the upper surface 112a of the bump 112 of the lower substrate 11 is positioned at the same height as or higher than the upper surface of the upper substrate 10 as in the first embodiment. The relationship between the upper surface 112a of the bump 112 of the lower substrate 11 and the upper surface 200a of the cylindrical portion 202 of the interposed substrate 20 is not particularly limited, and the upper surface 200a of the cylindrical portion 202 of the interposed substrate 20 may be positioned on the same level as the upper surface of the upper substrate 10, or may be positioned on the same level as the upper surface 112a of the bump 112 of the lower substrate 11, as shown in FIG. 4, for example.

In the marker mounting unit 2, it is preferable that, for example, there be substantially no gap between the outer periphery of the bump 112 of the lower substrate 11 and the inner periphery of the cylindrical portion 202 of the interposed substrate 20. "There is substantially no gap" means, for example, that even if there is a gap, it cannot be detected by a detection device such as a camera. As a specific example, under the conditions that the detection device is a CCD camera, the distance (observation distance) between the marker mounting unit 2 and the detection device is 1 m, the angle of view is 25°, and the size of the marker mounting unit 2 is 40 mm, the resolution is 0.22 mm/pixel. Thus, since the gap is displayed blurred in the pixels if the resolution is 0.22 mm or less, the gap is preferably 0.22 mm or less, more preferably 0.18 mm or less, and still more preferably 0.12 mm or less.

It is preferable that the bump 112 of the lower substrate 11 and the inside of the cylindrical portion 202 of the interposed substrate 20 have substantially the same shape, for example, and that the area of the plane of the former (for example, the cross section of the bump 112 in the planar direction, specifically, the upper surface 112a) and the area of the plane of the internal space of the latter (for example, the cross section of the internal space of the cylindrical portion 202 in the planar direction) be substantially the same. "The areas are substantially the same" means, for example, that the area of the plane of the bump 112 is in the range from 0.8 to 1 times as large as the area of the plane of the internal space of the cylindrical portion 202.

The shape of the cylindrical portion 202 of the interposed substrate 20 is not particularly limited, and, for example, the inside thereof has the same shape as the bump 112. The shape of the cylindrical portion 202 is, for example, a hollow circular cylindrical shape, a hollow polygonal cylindrical shape, or the like. The inner wall of the cylindrical portion 202 may be perpendicular or tapered with respect to the planar direction, for example. In the latter case, the inner wall of the cylindrical portion 202 widens as it extends from the top to the bottom.

In the marker mounting unit 2, for example, there may be or may not be a gap between the outer periphery of the cylindrical portion 202 of the interposed substrate 20 and the inner periphery of the through hole 102 of the upper substrate 10. Examples of the state of the gap include: a state in which the outer periphery of the cylindrical portion 202 of the interposed substrate 20 and the inner periphery of the through hole 102 of the upper substrate 10 face each other in parallel and are separated by a substantially constant distance; and a state in which the cylindrical portion 202 of the interposed substrate 20 has a cylindrical shape and the through hole 102 of the upper substrate 10 has a tapered shape or a stepped shape in which the diameter of the through hole 102 increases from the lower surface to the upper surface of the upper substrate 10.

In the marker mounting unit 2, it is preferable that, for example, there be no gap or no detectable gap between the outer periphery of the cylindrical portion 202 of the interposed substrate 20 and the inner periphery of the through hole 102 of the upper substrate 10. "There is no detectable gap" means, for example, that even if there is a gap, it cannot be detected by a detection device such as a camera. As a specific example, under the conditions that the detection device is a CCD camera, the distance (observation distance) between the marker mounting unit 2 and the detection device is 1 m, the angle of view is 25°, and the size of the marker mounting unit 2 is 40 mm, the resolution is 0.22 mm/pixel. Thus, since the gap is displayed blurred in the pixels if the resolution is 0.22 mm or less, the gap is preferably 0.22 mm or less, more preferably 0.18 mm or less, and still more preferably 0.12 mm or less.

According to the present embodiment, the cylindrical portion 202 of the interposed substrate 20 (for example, white) is disposed around the bump 112 (for example, black) serving as the detection reference portion of the lower substrate 11, for example, and the combination of these colors easily provides the contrast. Thus, the detection accuracy of the detection reference portion 112a can be further improved.

The method of manufacturing the marker mounting unit of the present embodiment is not particularly limited, and is, for example, the same as that of the first embodiment. In the case where the two-color molding is performed in the present embodiment, the stacking of the lower substrate 11 and the interposed substrate 20 can be performed by, for example, molding the lower substrate 11 having the bump 112 using a colored resin (for example, black) and then molding the interposed substrate 20 on the lower substrate 11 using a colored resin of a different color (for example, white). As a result, the interposed substrate 20 including the cylindrical portion 202 can be formed around the bump 112 with substantially no gap. Furthermore, according to this method, for example, since there is no need to insert the bump 112 of the lower substrate 11 into the through hole 201 and the cylindrical portion 202 of the interposed substrate 20, the corner of the leading end of the bump 112 can be prevented from being chipped due to contact at the time of insertion, and the shape of the bump 112 can be maintained. The stacking of the upper substrate 10 is not particularly limited, and, for example, a separately molded upper substrate 10 may be stacked on the interposed substrate 20, or the upper substrate 10 may be molded on the two-color molded laminate of the lower substrate 11 and the interposed substrate 20 using a resin (for example, a transparent resin).

In the present embodiment, for example, the lower substrate 11, the interposed substrate 20, and the upper substrate 10 may be prepared separately, and the bump 112 of the lower substrate 11 may be inserted into the through hole 201 and the cylindrical portion 202 of the interposed substrate 20, and into the through hole 102 of the upper substrate 10. In the present embodiment, the interposed substrate 20 has the cylindrical portion 202 that forms the through hole 201. Thus, the cylindrical portion 202 of the interposed substrate 20 serves as a guide and allows the bump 112 of the lower substrate 11 to be smoothly inserted into the through hole 201 and the cylindrical portion 202 of the interposed substrate 20. In addition, as a result, the corner of the leading end of the bump 112 of the lower substrate 11 can be prevented from being chipped by the contact at the time of insertion, and the shape of the bump 112 can be maintained.

### Fourth Embodiment

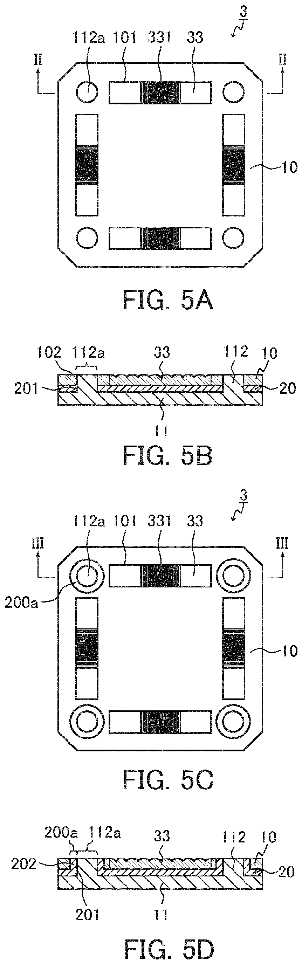

The fourth embodiment relates to an example of the marker mounting unit further including a marker. Since the present embodiment includes the marker, it is also referred to as an example of a marker unit. FIGs. 5A to 5D show an example of the marker unit of the present embodiment. FIGs. 5A and 5B are schematic diagrams of a marker unit 3 in which a marker 33 is mounted on the marker mounting unit 2 of FIG. 3, FIG. 5A is a top view of the marker unit 3, and FIG. 5B is a cross-sectional view of the marker unit 3 taken along the line II-II of FIG. 5A. In the present embodiment, reference can be made to the description of the first to third embodiments, unless otherwise stated.

As shown in FIGs. 5A and 5B, in the marker unit 3, the marker 33 is arranged on the interposed substrate 20 and in the marker arrangement region 101 of the upper substrate 10 of the marker mounting unit 2 of FIG. 3. The marker mounting unit of the present invention and the marker unit of the present invention are characterized by the configuration of the detection reference portion, and the type of a marker to be mounted is not limited in any way. In the present embodiment, a so-called RAS marker using a lenticular lens is described as an example. The present invention, however, is not limited thereto, and other two-dimensional pattern codes and the like may be used. The two-dimensional pattern code is not particularly limited, and examples thereof include an AR marker and a QR marker. Examples of the AR marker include an ARToolKit, an ARTag, a CyberCode, and an ARToolKitPlus.

Furthermore, the marker mounting unit of the present invention and the marker unit of the present invention are characterized by the configuration of the detection reference portion as described above, and the position where the marker is mounted is not limited at all. For example, in FIG. 5A, when the marker is mounted at the center, for example, the upper substrate 10 may have the marker arrangement region at a corresponding position, and the marker may be mounted in the marker arrangement region.

In the marker mounting unit of the present invention and the marker unit of the present invention, for example, the upper surface of the marker arrangement region of the upper substrate also serves as the upper surface of the marker. In the case where the marker is, for example, a RAS marker or the like, the upper substrate, the lower substrate, and optionally the interposed substrate are arranged as described above in a state where the detectable portion (e.g., a detectable stripe pattern, a dot pattern, or the like) of the marker is formed on the lower surface of the upper substrate in a region corresponding to the marker arrangement region. As a result, the position of the upper substrate corresponding to the marker arrangement region serves as the marker in the marker unit of the present invention. It is to be noted that the present invention is not limited thereto. For example, the marker arrangement region of the upper substrate may be a through hole, and in the marker mounting unit, a separately prepared marker may be arranged on the lower substrate or optionally on the interposed substrate at a position corresponding to the marker arrangement region. In this case, it is preferable that the upper surface of the marker be positioned at a level equivalent to the upper surface of the bump serving as the detection reference portion, for example.

An example of the marker 33 shown in FIGs. 5A to 5D is described below. In the present invention, the marker is not limited to the following description.

The marker 33 includes a lens main body having a plurality of lens units, and the plurality of lens units are arranged continuously in the planar direction. A direction in which the lens units are arranged is referred to as an arrangement direction or a width direction, and a direction perpendicular to the arrangement direction in the planar direction is referred to as a length direction.

The lens unit in the lens main body may be, for example, a cylindrical lens. The lens main body is, for example, a light-transmitting member. The light-transmitting member is not particularly limited, and may be formed of a resin, glass, or the like, for example. The resin may be, for example, a polycarbonate, an acrylic resin such as polymethyl methacrylate (PMMA), a cycloolefin polymer (COP), a cycloolefin copolymer (COC), or the like.

The lens main body includes a light-condensing portion having a function of condensing light on one surface side and a plurality of detectable portions on the other surface side. The detectable portions are, for example, lines that extend along the length direction of the lens main body, and a stripe pattern is formed by the plurality of lines on the other surface side of the lens main body. The plurality of detectable portions are projected on the upper surface side of the lens main body as an optically detectable image and can be optically detected, for example.

The detectable portion needs only be optically detectable, and may be a colored film, for example. The color of the colored film is not particularly limited, and may be black, for example. The colored film may be, for example, a coating film, and can be formed of a coating material. The coating material is not particularly limited, and may be a liquid coating material or a powder coating material, for example. The coating film can be formed by coating and/or solidifying the coating material, for example. The coating method may be, for example, spray coating, screen printing, or the like. The solidifying method may be, for example, drying of the liquid coating material, curing of a curable component (e.g., a radical polymerizable compound or the like) in the coating material, baking of the powder coating material, or the like.

The pattern formed by the detectable portions is by no means limited. For example, when the pattern is the above-described stripe pattern, the density of the color forming the stripe pattern may be uniform, or the stripe pattern may contain color gradations, for example.

When the marker 33 is placed on, for example, a white object, among light rays that have entered from the upper surface of the lens main body of the marker 33, the light rays that have reached the detectable portions are absorbed by the detectable portions (e.g., black colored films), and the other light rays pass through the lens main body and are reflected from the surface of the object. Accordingly, on the upper surface of the lens main body, images of the detectable portions (e.g., black lines) are projected onto a white background. Thus, in the marker unit 3, the interposed substrate 20 on which the marker 33 is arranged functions as a reflector, and therefore, for example, when the detectable portion of the marker 33 is formed in black, it is preferable that the upper surface of the interposed substrate 20 located below the marker 33 be white.

FIGs. 5A and 5B show an example of the marker unit 3 in which the marker 33 is mounted on the marker mounting unit 2 of FIG. 3, the present embodiment is not limited thereto. FIGs. 5C and 5D are cross-sectional views of the marker unit 3 in which the marker 33 is mounted on the marker mounting unit 2 of FIG. 4. As shown in FIGs. 5C and 5D, in the marker unit 3, the marker 33 may be arranged on the interposed substrate 20 and in the marker arrangement region 101 of the upper substrate 10 of the marker mounting unit 2 of FIG. 4. Although it is not shown, for example, in the marker mounting unit 1 of FIGs. 1A and 1B, the marker 33 may be arranged on the lower substrate 11 and in the marker arrangement region 101 of the upper substrate 10.

### Fifth Embodiment

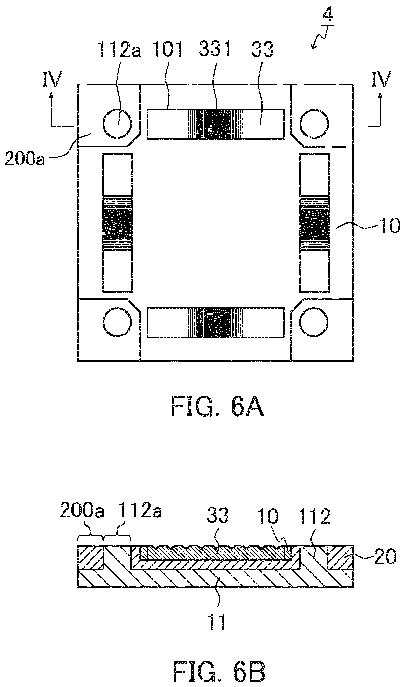

The fifth embodiment relates to, as another example of the marker mounting unit of the present invention, a variation of the marker mounting unit composed of three substrates as in the third embodiment. FIGs. 6A and 6B are schematic views of the marker mounting unit 4 of the present embodiment, FIG. 6A is a plan view, and FIG. 6B is a cross-sectional view taken along the line IV-IV of FIG. 6A.

As shown in FIG. 4, the marker mounting unit 2 according to the third embodiment is configured so that, on the upper surface side thereof, the entire periphery of the upper surface 112a of the bump 112 of the lower substrate 11 is surrounded by the upper surface 200a of the cylindrical portion 202 of the interposed substrate 20, and the entire periphery of the upper surface 200a is surrounded by the upper substrate 10. On the other hand, the marker mounting unit 4 according to the present embodiment is configured so that, on the upper surface side, the entire periphery of the upper surface 112a of the bump 112 of the lower substrate 11 is surrounded by the upper surface 200a of the cylindrical portion 202 of the interposed substrate 20, whereas the entire periphery of the upper surface 200a is not surrounded by the upper substrate 10.

Detection of the detection reference portion 112a on the upper surface of the bump 112 of the marker mounting unit 4 is generally performed by detecting the edge between the bump 112 and the substrate (interposed substrate 20 in FIGs. 6A and 6B) surrounding the entire periphery of the bump 112. Thus, in the case of a three-layer substrate, for example, the entire periphery of the substrate (interposed substrate 20) surrounding the entire periphery of the bump 112 is not necessarily surrounded by another substrate (upper substrate 10).

### Sixth Embodiment

The sixth embodiment relates to an aspect in which, in the marker mounting unit, the gap between the outer periphery of the bump of the lower substrate and the inner periphery of the through hole of the interposed substrate and the gap between the outer periphery of the cylindrical portion of the interposed substrate and the inner periphery of the through hole of the upper substrate satisfy a predetermined relationship.

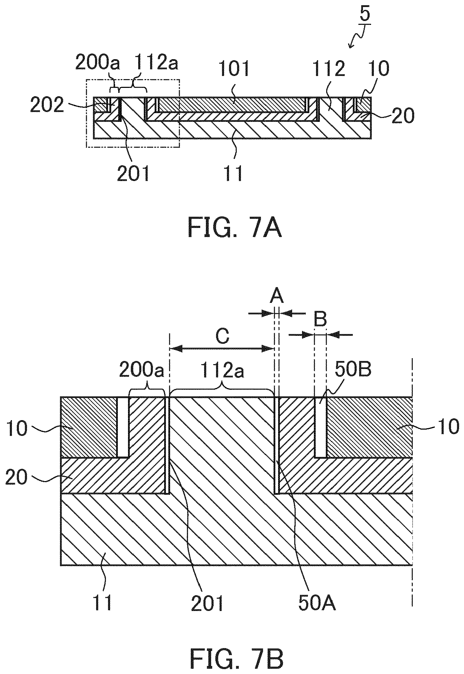

FIGs. 7A and 7B are schematic views of the marker mounting unit 5 of the present embodiment, FIG. 7A is a cross-sectional view seen from the same direction as FIG. 4, and FIG. 7B is a partial cross-sectional view of a region surrounded by the dotted line in FIG. 7A. In the present embodiment, reference can be made to the description of the third embodiment, unless otherwise stated.

As shown in FIGs. 7A and 7B, like the marker mounting unit 2 shown in FIG. 4, the marker mounting unit 5 includes the lower substrate 11 and the interposed substrate 20. The marker mounting unit 5 is a laminate in which the upper substrate 10 is further stacked on the interposed substrate 20.

In the marker mounting unit 5, for example, there may be a gap between the outer periphery of the cylindrical portion 202 of the interposed substrate 20 and the inner periphery of the through hole of the upper substrate 10 as shown in FIGs. 7A and 7B.

In the marker mounting unit 5, preferably, the gap (A) 50A between the bump 112 of the lower substrate 11 and the through hole 201 of the interposed substrate 20 is, for example, 5% or less of the size of the bump 112 (diameter C of the circular bump 112) (A ≤ 0.05 × C). The gap A is preferably 0.04 × C or less or 0.03 × C or less, for example. On the other hand, it is preferable that the gap (A) 50A and the gap (B) 50B between the cylindrical portion 202 of the interposed substrate 20 and the through hole 102 of the upper substrate 10 satisfy A < B.

When the conditions of the lower substrate 11, the interposed substrate 20, and the upper substrate 10 are set in this manner, for example, even when the marker mounting unit 5 is formed by preparing the substrates separately by molding, inserting the bump 112 into the through hole 201 of the cylindrical portion 202, and inserting the cylindrical portion 202 into the through hole 102 of the upper substrate 10, the gap between the bump 112 of the lower substrate 11 and the through hole 201 of the interposed substrate 20 can be reduced. Thus, the detection accuracy of the bump 112 can be improved.

While the present invention has been described above with reference to illustrative embodiments, the present invention is by no means limited thereto. Various changes and variations that may become apparent to those skilled in the art may be made in the configuration and specifics of the present invention without departing from the scope of the present invention.

### Industrial Applicability

As described above, in the marker mounting unit of the present invention, the lower substrate has the bump, and the bump is inserted into the through hole of the upper substrate, whereby the detection reference portion, which is the upper surface of the bump, is positioned higher than the upper surface of the other region of the lower substrate and at the same height as or higher than the upper surface of the upper substrate. Thus, the marker mounting unit of the present invention can accurately detect the detection reference portion.

This application claims priority from Japanese Patent Application No. 2017-004654 filed on January 13, 2017 and Japanese Patent Application No. 2017-040564 filed on March 3, 2017. The entire subject matter of the Japanese Patent Application is incorporated herein by reference.

### Reference Signs List

- 1, 2, 4, 5: marker mounting unit
- 3, 6: marker unit
- 10, 40: upper substrate
- 11, 41: lower substrate
- 20, 42: interposed substrate
- 101, 401: marker arrangement region
- 112: bump
- 202: cylindrical portion
- 33, 43: marker
- 331, 431: image
- 50A, 50B: gap

## Claims

1. A marker mounting unit comprising:
an upper substrate; and
a lower substrate, wherein
the marker mounting unit is a laminate in which the upper substrate is stacked on the lower substrate,
the upper substrate has a through hole,
the lower substrate has a bump serving as a detection reference portion at a position corresponding to the through hole of the upper substrate,
the bump of the lower substrate is inserted into the through hole of the upper substrate, and
in the laminate, an upper surface of the bump of the lower substrate is positioned at the same height as or higher than an upper surface of the upper substrate.

2. The marker mounting unit according to claim 1, wherein
the upper substrate is stacked directly on the lower substrate, and
there is no gap or no detectable gap between an outer periphery of the bump of the lower substrate and an inner periphery of the through hole of the upper substrate.

3. The marker mounting unit according to claim 1 or 2, wherein
the upper substrate is a transparent substrate.

4. The marker mounting unit according to any one of claims 1 to 3, wherein
the upper surface of the bump of the lower substrate is formed of a colored member.

5. The marker mounting unit according to any one of claims 1 to 4 further comprising:
an interposed substrate, wherein
in the laminate, the interposed substrate is disposed between the lower substrate and the upper substrate,
the interposed substrate has a through hole at a position corresponding to the through hole of the upper substrate, and
the bump of the lower substrate is inserted into the through hole of the interposed substrate and the through hole of the upper substrate.

6. The marker mounting unit according to claim 5, wherein
on the upper surface side of the laminate,
a length of a gap (A) between the outer periphery of the bump of the lower substrate and an inner periphery of the through hole of the interposed substrate and a length of the bump (C) in the same planar direction satisfy A ≤ 0.05 × C.

7. The marker mounting unit according to claim 5 or 6, wherein
the interposed substrate has a cylindrical portion protruding upward around the through hole, and
the bump of the lower substrate is inserted into the through hole in the cylindrical portion of the interposed substrate.

8. The marker mounting unit according to claim 7, wherein
on the upper surface side of the laminate,
the length of the gap (A) between the outer periphery of the bump of the lower substrate and the inner periphery of the through hole of the interposed substrate and a length of a gap (B) between an outer periphery of the cylindrical portion of the interposed substrate and the inner periphery of the through hole of the upper substrate satisfy A < B.

9. The marker mounting unit according to any one of claims 5 to 8, wherein
the upper substrate is stacked on the lower substrate with the interposed substrate interposed therebetween,
there is no distance between the outer periphery of the bump of the lower substrate and the inner periphery of the through hole of the interposed substrate, or there is no gap or no detectable gap between the outer periphery of the bump of the lower substrate and the inner periphery of the cylindrical portion of the interposed substrate.

10. The marker mounting unit according to any one of claims 5 to 9, wherein
the interposed substrate is a reflector.

11. The marker mounting unit according to any one of claims 5 to 10, wherein
the upper surface of the bump of the lower substrate is different from an upper surface of the interposed substrate in at least one of hue, lightness, and saturation.

12. The marker mounting unit according to any one of claims 5 to 11, wherein
the upper substrate is a transparent substrate,
the interposed substrate is a substrate having a white upper surface, and
the lower substrate is a substrate that has the bump having a black upper surface.
